# EUROPEAN PATENT APPLICATION

(11) **EP 1 199 762 A2**
(43) Date of publication of application: **24.04.2002**
(21) Application number: 01124116.3
(22) Date of filing: 10.10.2001
(51) Int. Cl.: H01M 10/12, H01M 4/22, H01M 2/36

(54) **A plant for the electrochemical forming of lead-acid batteries, particularly for motor vehicles**

(30) Priority: 19.10.2000 IT TO000983
(71) Applicant: Societa' Industriale Accumulatori SpA, 24058 Romano Di Lombardia, (Bergamo) (IT)
(72) Inventor: Ghizzoni, Giulio, 20094 Buccinasco, (Milano) (IT); Possenti, Ildebrando, 20060 Albignano, (Milano) (IT)
(74) Representative: Quinterno, Giuseppe

(57) **Abstract**

The plant (1) comprises:
- an endless-belt conveyor (2), movable in steps between a loading station (ST1) in which, upon each stoppage between two steps, it receives at least one row (R) of batteries (B) to be formed, and a discharge station (ST2) in which, upon each stoppage, it enables at least one row of formed batteries (B) to be removed,
- a plurality of support elements (20) which are fixed to one side of the belt conveyor (2) and each of which can be associated with a row (R) of batteries and is provided with a hydraulic connector (21) with an inlet (21a) and an outlet (21b), as well as electrical-connection members (23, 24; 29, 34) which can cooperate with fixed, direct-current voltage-distribution means (30; 25-27),
- electrical-interconnection cables (29, 31; 33, 34) for connecting the batteries (B) of each row in series between the electrical-connection members (23, 24) of the associated support element (20),
- a plurality of hydraulic interconnection and distribution devices (40) each of which can connect the outlet (21b) of the hydraulic connector (21) of a support element (20) to the inlet openings (47) of the cells (58) of the batteries (B) of a row (R), and
- a plurality of electrolyte-dispensing devices (60) which are disposed in fixed locations along the conveyor (2) and each of which, upon each stoppage of the conveyor, can be connected to the inlet (21a) of the hydraulic connector (21) of a corresponding support element (20) of the conveyor (2).

## Description

The present invention relates to a plant for the electrochemical forming of lead-acid batteries, in particular, batteries for starting motor vehicles.

An object of the invention is to provide a plant which reduces the times required for the electrochemical forming of the batteries and which has small dimensions and low costs.

This and other objects are achieved, according to the invention, by a plant comprising:
an endless-belt conveyor, movable in steps along a substantially horizontal operative path between a loading station in which, upon each stoppage between two steps, it can receive, on one of its end portions, at least one new row of batteries to be formed, arranged transverse its direction of movement, and a discharge station in which it enables at least one row of formed batteries to be removed from its opposite end portion,
a plurality of support elements which are fixed to a longitudinal side of the belt of the conveyor and each of which can be associated with a row of batteries transported, each support carrying a hydraulic connector with an inlet and an outlet, and electrical-connection members,
fixed, direct-current, electrical voltage-distribution means which extend along the operative path and which can be engaged by the electrical-connection members of the support elements which extend from the upper side of the conveyor belt,
electrical-interconnection means which can be connected releasably to the terminals or poles of the batteries of each row in order to connect these batteries in series between the electrical-connection members of the associated support element,
a plurality of hydraulic interconnection and distribution devices each of which can connect the outlet of the hydraulic connector of a support element to the inlet openings of the cells of the batteries of a row, and
electrolyte-supply means comprising a plurality of dispensing devices which are disposed in fixed locations along the operative path and are spaced apart by a distance corresponding to one step of the conveyor, and each of which, upon each stoppage of the conveyor, can be connected to the inlet of the hydraulic connector of a corresponding support element of the conveyor in order to dispense a stream of electrolyte to the batteries of the corresponding row, by means of the associated hydraulic interconnection and distribution devices.

Further characteristics and advantages of the plant according to the invention will become clear from the following detailed description, given purely by way of non-limiting example, with reference to the appended drawings, in which:
Figure 1 is a plan view of a plant according to the invention,
Figure 2 is a partial view, sectioned on the line II-II of Figure 1,
Figure 3 is a partial perspective view which shows electrolyte-supply means included in a plant according to the invention,
Figure 4 is an elevational view showing a detail indicated IV in Figure 2, on an enlarged scale,
Figure 5 is a partially-sectioned view which shows a hydraulic interconnection and distribution device used in the plant according to the invention,
Figure 6 is a view sectioned on the line VI-VI of Figure 5,
Figure 7 is a sectioned view which shows a detail of a hydraulic interconnection and distribution device,
Figure 8 is a partial perspective view which shows electrical distribution means included in a plant according to the invention, and
Figure 9 is a block diagram which shows a control and operating system for the plant according to the invention.

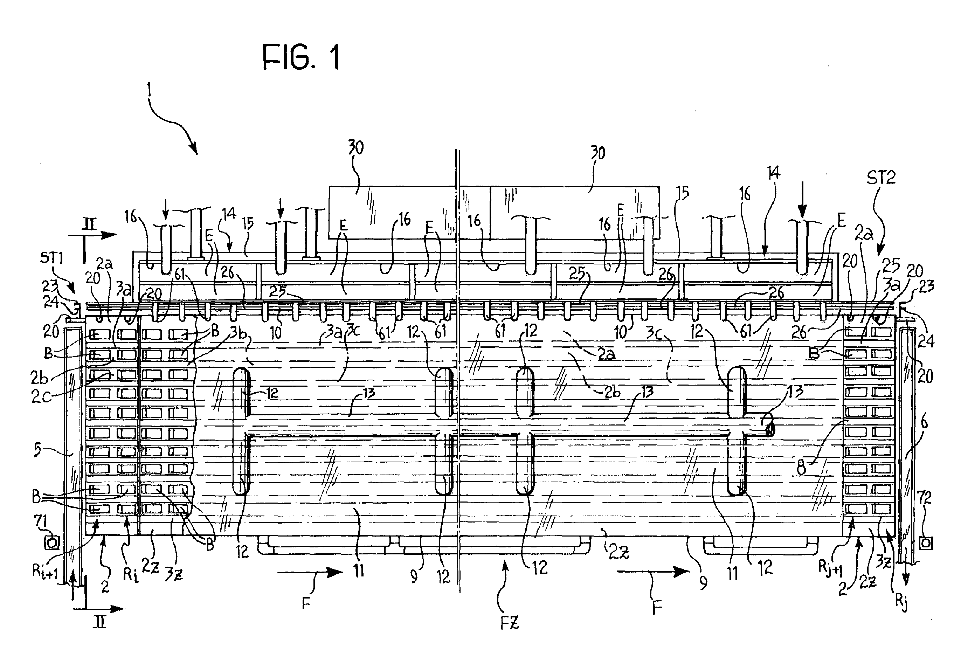

In Figure 1, a plant for the electrochemical forming of lead-acid batteries B, such as motor-vehicle starting batteries, is generally indicated 1.

The plant 1 comprises an endless-belt conveyor, generally indicated 2. In the embodiment shown by way of example, the' conveyor 2 comprises a plurality of parallel, endless belt sections, indicated 2a, 2b, ... 2z, which are moved in steps, in synchronism, along a substantially horizontal operative path, in the direction of the arrows F of Figure 1.

The above-mentioned parallel sections of the belt conveyor 2 are spaced apart transversely, as can be seen in Figures 1 to 3. Stationary collection tanks, indicated 3a, 3b, ...3z, extend between adjacent pairs of these sections of the belt conveyor. These tanks, the function of which will be explained below, extend substantially along the entire length of the upper side of the conveyor 2.

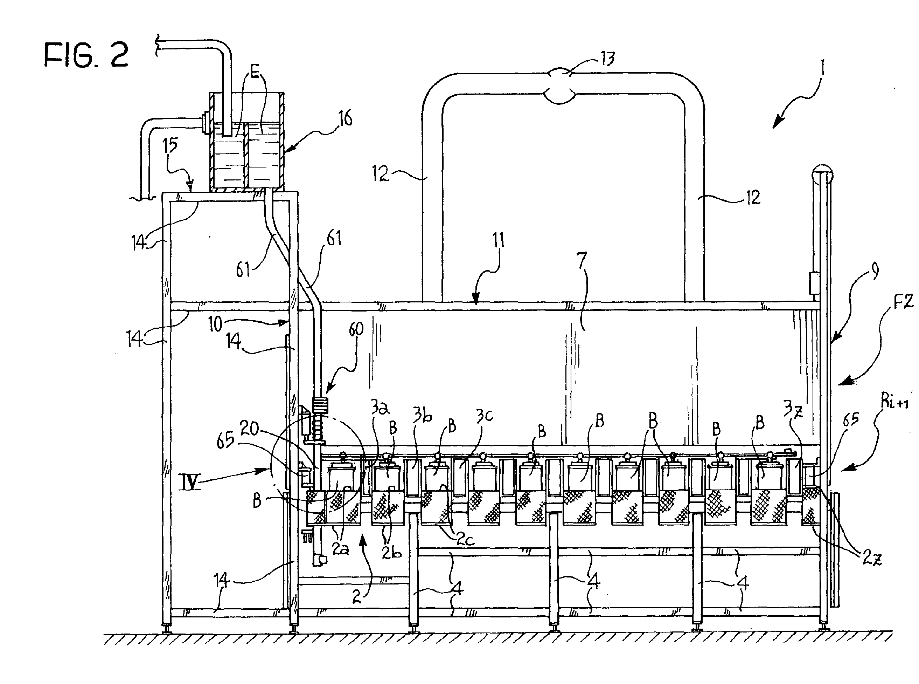

The belt conveyor 2 and the associated tanks 3 are supported by a support framework, generally indicated 4 in Figure 2.

With reference to Figure 1, a loading station ST1 is defined in the vicinity of the input end of the belt conveyor 2 (that is, the left-hand end as seen in this drawing). In operation, in this station, upon each stoppage between two steps of the conveyor 2, an operator loads a new row, and preferably two new rows, of batteries B to be formed. The last two new rows of batteries to be formed, which are positioned on the conveyor 2 in the loading station ST1, are indicated Rᵢ and Rᵢ₊₁, respectively, in Figure 1. Each of these rows of batteries extends transverse the direction of movement of the conveyor 2.

In the embodiment shown in Figure 1, an auxiliary belt conveyor 5, extending in the loading station ST1, is arranged transversely relative to the main conveyor 2 and is intended to bring to the station ST1 a series of batteries to be formed, which the operator transfers manually onto the conveyor 2, arranging them in parallel rows.

A discharge station ST2 is defined at the opposite end of the belt conveyor 2. In this station, a further operator removes one row, and preferably two rows, of formed batteries B upon each stoppage of the conveyor 2, arranging them, for example, in series on a conveyor belt 6 which removes them from the plant 1.

The plant shown by way of example in Figure 1 is formed in a manner such that, upon each stoppage of the belt conveyor 2, the operator in the loading station ST1 loads two rows of batteries to be formed onto the conveyor 2 and, at the same time, the operator at the discharge station ST2 removes two rows of already-formed batteries B from the opposite end of the conveyor. The latter two rows are indicated Rⱼ and Rⱼ₊₁ in Figure 1.

The zone for the electrochemical forming of the batteries, indicated FZ in Figures 1 to 3, is defined between the loading station ST1 and the discharge station ST2, along the belt conveyor 2. In this zone, the region disposed above the belt conveyor 2 is defined by two end walls 7, 8 and by longitudinal walls 9 and 10, all of which are preferably transparent to permit visual inspection of the plant.

The forming zone FZ is closed at the top by a substantially horizontal covering wall or ceiling 11 in which there are openings with which suction ducts 12, in turn connected to a manifold 13, are coupled (Figures 1 and 2).

A support framework, indicated 14, extends along one side of the belt conveyor 2 in the forming zone FZ.

A series of tanks 16, containing an electrolyte E, are supported on an upper surface 15 of this framework.

A plurality of support elements 20, each associated with a corresponding row R of batteries B transported, are fixed on the longitudinal side of the belt conveyor 2 adjacent the framework 14 and, in particular, on the longitudinal side of the section 2a of the conveyor. The support elements are arranged in succession at regular intervals equal to one step of the forward movement of the belt conveyor 2.

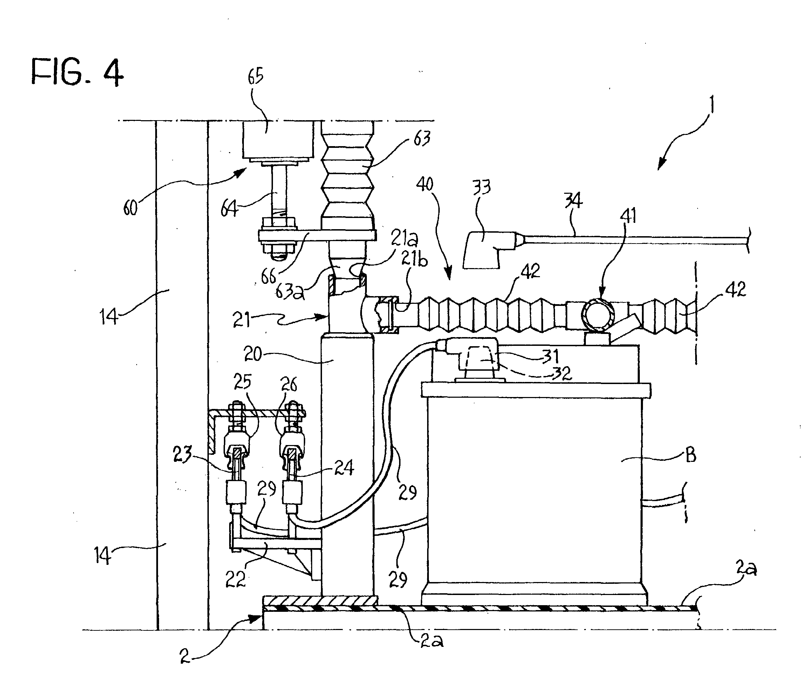

At its free end, each support element 20 carries a substantially L-shaped hydraulic connector 21 with an inlet opening 21a which faces upwards and an outlet opening 21b which faces sideways (Figure 4).

A respective bracket 22 fixed laterally to each support element 20 carries a pair of electrical sliding-contact members or brushes 23 and 24.

The conductive brushes 23 and 24 associated with the support elements 20 extending from the upper side of the conveyor belt 2 engage in respective longitudinal guides 25 and 26 fixed to the support framework 14 (Figures 1, 3 and 4).

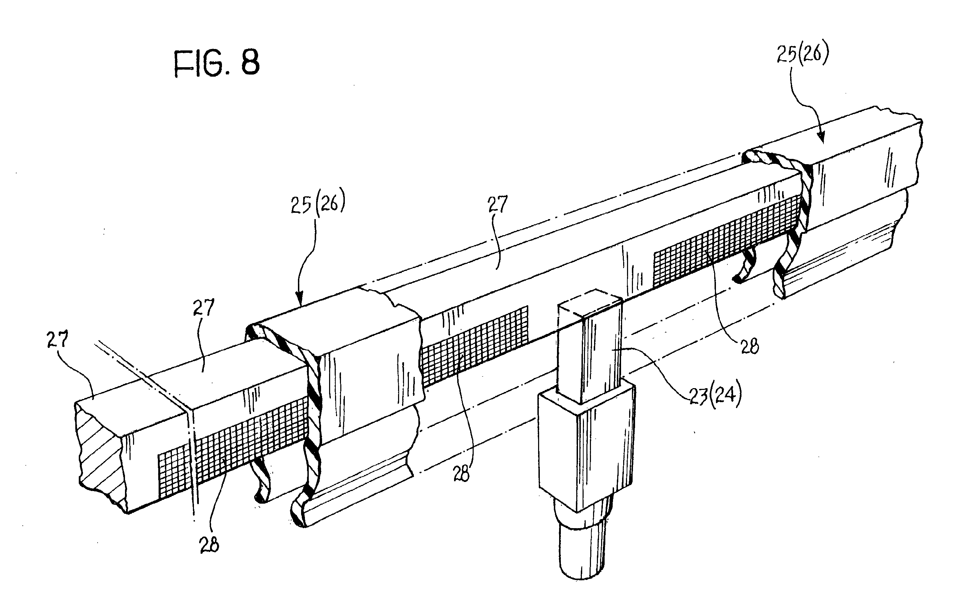

As a result of the forward movement of the belt conveyor 2, the brushes 23 and 24 engaged in the guides 25 and 26 slide in contact with respective electrically-conductive bars such as that indicated 27 in Figure 8. These bars are connected to output terminals of rectifier/supply circuits, indicated 30 in Figure 1, for providing a direct-current electrical voltage.

The bars 27 are formed, and cooperate with the associated brushes 23 and 24, in a manner such that the direct-current voltage supply between the brushes 23 and 24 (of the support elements 20 extending from the upper face of the conveyor 2) takes place upon each stoppage of the belt conveyor 2 and is interrupted during its successive forward movements or steps. This is achieved, for example, by providing, in the bars 27, electrically-insulating inserts 28 (Figure 8) to be engaged slidingly by the brushes 23 and 24 during each forward movement of the conveyor 2.

As can be seen in Figure 4 in particular, a respective insulated electrical cable 29 is connected to each brush 23, 24 associated with each support element 20 and terminates in a cap-like connector 31 which can be connected to a corresponding terminal 32 of a battery B of the associated row of batteries.

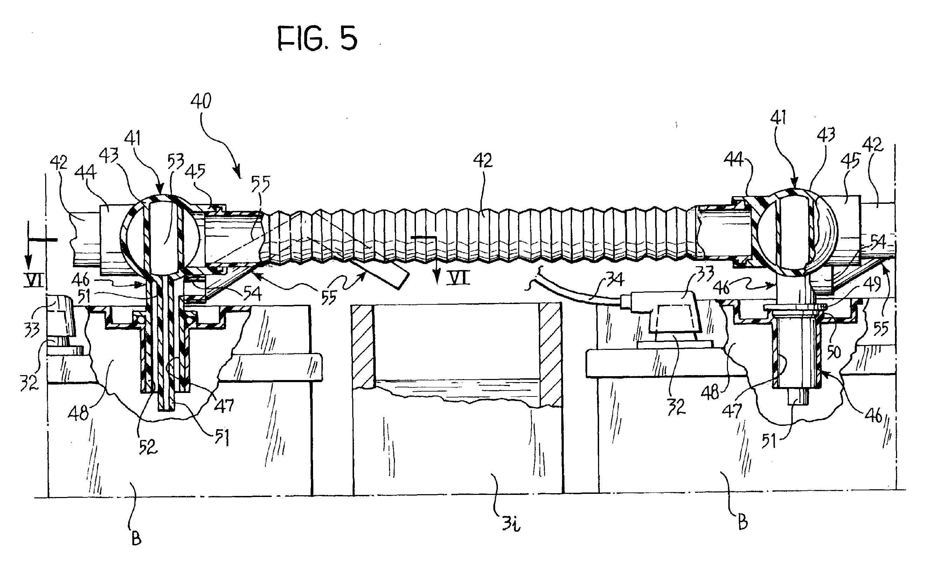

By means of these cables 29, as well as further insulated cables 34 (Figure 4) provided with cap-like end connectors 33, the operator in the loading station ST1 connects each row of batteries B electrically in series between the brushes 23 and 24 of the associated support element 20 fixed to the conveyor 2 (see also Figure 5).

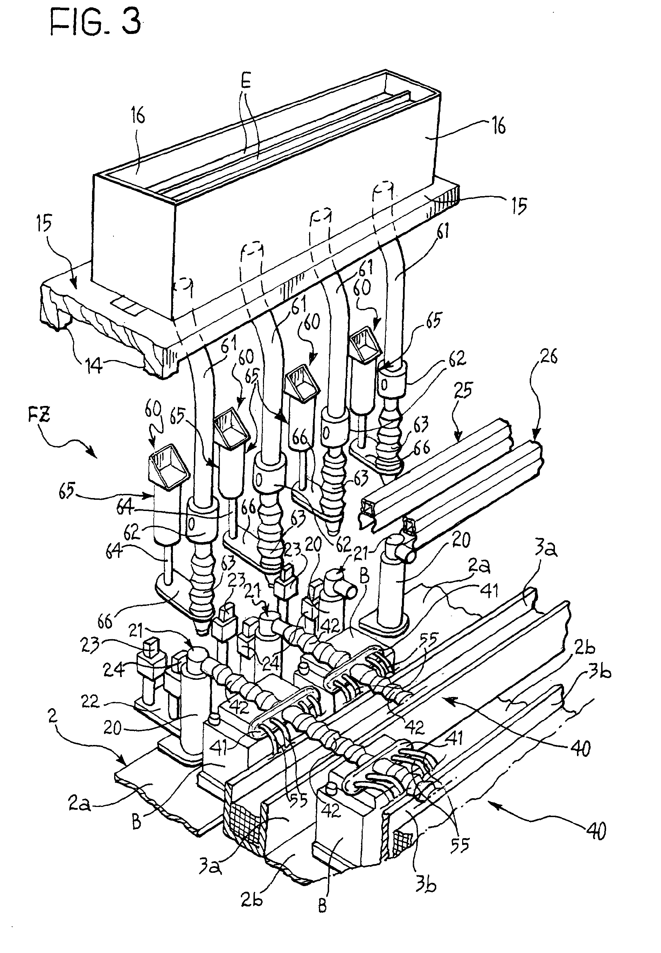

In the loading station ST1, the operator also connects a respective hydraulic interconnection and distribution device 40 to each new row of batteries (Figures 3 to 7). Each of these devices comprises a plurality of distributor elements 41 each of which is associated with a respective battery B and which are interconnected by a plurality of duct portions 42.

As can best be seen in Figure 4, a first duct portion 42 interconnects the outlet 21b of the connector 21 of each support element 20 to the distributor element 41 of the first battery B of the row of batteries associated with the support element. A further plurality of duct portions 42 then connects the distributor element 41 of the first battery B of each row to the distributor elements associated with the other batteries of the row, in cascade.

The duct portions 42 are preferably formed as bellows, as shown in the drawings, in order to be able to compensate for the variations in the distances between the distributor elements 41 associated with the batteries of each row.

With reference to Figures 5 to 7, each distributor element 41 comprises an elongate, tubular body 43 closed at its ends and having, in its intermediate region, two opposed unions 44 and 45 in which corresponding ends of two duct portions 42 can be fitted in a leaktight manner.

A normal lead-acid battery for starting a motorcar typically has six cells in which corresponding assemblies of plates are immersed in the electrolyte. Accordingly, a set of six aligned protuberances 46, spaced apart to an extent corresponding to the distance between the openings in the cover of a battery B, which corresponds to the various cells of the battery, extends from the lower side of each distributor element 41.

As can be seen in Figure 5 in particular, each protuberance 46 of a distributor element 41 can be inserted in the opening 47 of a cell 48 of the corresponding battery B. Advantageously, each protuberance 46 has an outer annular flange 49 and a toric sealing ring 50 to be gripped between the flange and the edge of the mouth of the opening 47 of the associated battery cell 48 (see the right-hand portion of Figure 5 in particular).

Each protuberance 46 of a distributor element 41 defines two coaxial ducts 51 and 52, that is, an inner duct and an outer duct, respectively. The inner duct 51 is a flow duct and its upper end communicates with the region 53 inside the body 43 of the distributor element 41.

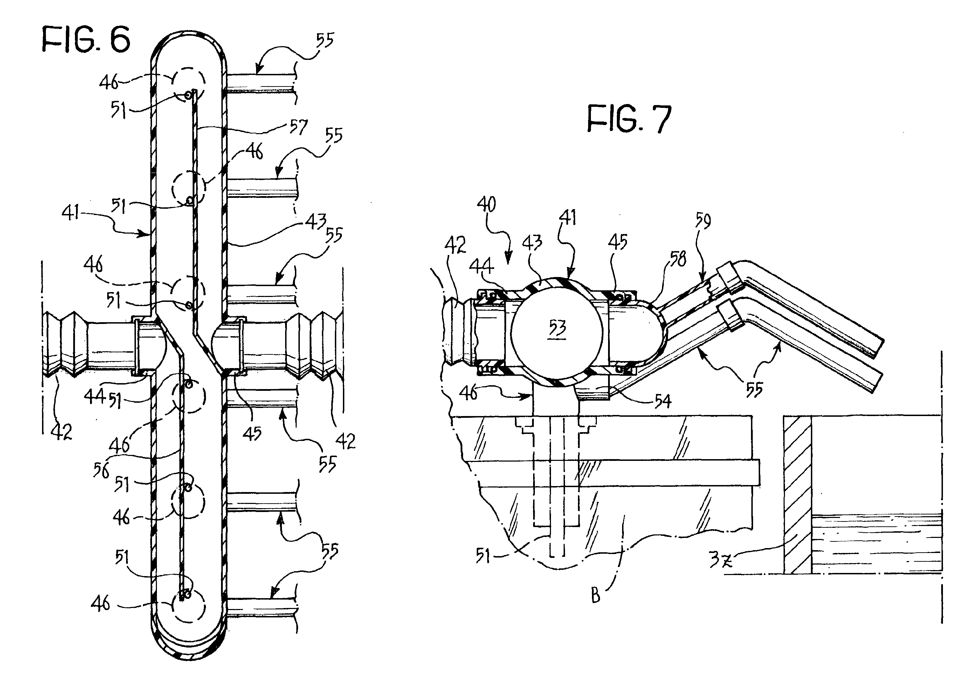

The second duct 52 is a breather and overflow duct, the upper end of which forms a lateral connector 54 in which an end of a pipe 55 is engaged; the pipe 55 extends along a substantially inverted V-shaped line and may be formed in two portions, as can be seen in Figure 7.

The pipe portions 55 which extend from each distributor element 41 open over an associated stationary tank 3i (Figure 5) (i = a, b, c, ... z).

As can be seen in Figure 6, a pair of dividing walls 56, 57 extends inside the body 43 of each distributor element 41 to define a labyrinthine path between in inlet union 44 and the outlet union 45. The dividing walls are arranged in a manner such that the dividing wall 56 is upstream of the flow ducts 51 and the dividing wall 57 is downstream of these ducts.

As can be seen in Figure 7, an end element 58 is connected to the outlet union 45 of the distributor element 41 associated with the end battery of each row (that is, the battery farthest to the right in each row as seen, for example, in Figure 2) and has a breather hole 59 which puts the region 53 inside the distributor element 41 into communication with an inverted V-shaped pipe 59 which opens over the adjacent stationary tank 3z.

With reference to Figures 1 to 4, the plant 1 further comprises a system for supplying streams of electrolyte from the tanks 16 (Figures 1 to 3) to the inlets 21a of the connectors 21 carried by the support elements 20 and, through these connectors, to the batteries B of the various rows, by means of the respective hydraulic interconnection and distribution devices described above.

With reference to Figure 2 and, even more specifically, to Figure 3, this electrolyte-supply system comprises a plurality of dispenser devices 60 located in respective fixed positions along and above the path of the support elements 20 connected to the belt conveyor 2. The distances between the dispenser devices 60 are equal to the distances between the support elements 20 fixed to the conveyor and thus correspond to one forward step of the conveyor.

Each dispenser device 60 comprises a pipe 61 which extends between a corresponding opening formed in the base of a tank 16 and the inlet of an on-off solenoid valve 62. The output of the solenoid valve is connected to one end of a bellows-like pipe 63 the lower end of which is connected to the rod 64 of a cylinder 65 by means of a plate 66 (Figures 3 and 4).

The cylinders 65 of the various dispenser devices 60 are fixed to the framework 14, as can be seen, for example, in Figure 2.

The operation of the cylinder 65 enables the bellows-like pipe 63 of each dispenser device to be lowered so that the lower end 63a of this pipe, which is advantageously tapered frustoconically, as can be seen in Figure 4, can be introduced into the inlet opening 21a of the connector 21 of the underlying support element 20.

The number of dispenser devices 60 of the plant preferably corresponds to the number of support elements 20 of the conveyor 2 which are included in the forming zone FZ.

With reference to Figure 1, manually-operable consent devices, 71 and 72, the functions of which will be explained below, are located in the loading station ST1 and in the discharge station ST2, respectively.

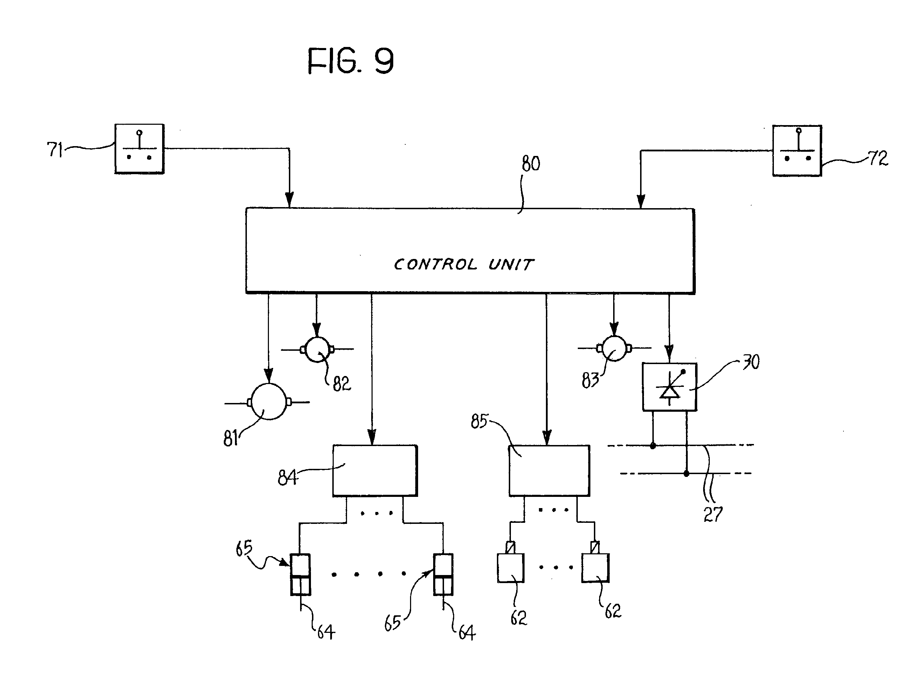

Figure 9 shows schematically the architecture of the control system associated with the plant 1 described above.

This system comprises, basically, an electronic control unit 80 to which the consent devices 71 and 72 are connected.

The unit 80 controls the operation of an electric motor 81 for bringing about the forward movement of the belt conveyor 2 in steps, as well as two further electric motors 82 and 83 associated with the conveyors 5 and 6 of the loading and discharge stations.

The unit 80 is also connected to rectifier circuits 30 which, in operation, supply the direct-current supply voltage to the bars 27 with which the brushes 23, 24, associated with the support elements 20 extending from the upper side of the belt conveyor 2, can cooperate.

The control unit 80 can also control the operation of the cylinders 65 and of the solenoid valves 62, by means of two interface units 84 and 85, respectively.

The plant 1 described above is arranged to operate, for example, in the following manner.

An operator in the loading station ST1 transfers the batteries B to be formed, which arrive therein on the conveyor 5, onto the belt conveyor 2, and arranges them in ordered rows.

Each row Rᵢ of batteries is aligned with an associated support device 20 fixed to the conveyor 2.

After one or two rows of batteries have been prepared on the portion of the conveyor 2 which extends in the station ST1, the operator interconnects the batteries of each row in series with the brushes 23, 24 of the associated support device 20, by means of the electrical cables 29 and 34. He also fits a respective hydraulic interconnection and distribution device 40 to each row of batteries, connecting a respective distributor element 41 to each battery and interconnecting the various distributor elements associated with a row of batteries, by means of the duct portions 42. A first duct portion 42 is connected to the outlet 21b of the connector 21 carried by the associated support device 20.

After the electrical and hydraulic connections for the row or rows of batteries disposed on the conveyor 2 in the loading station ST1 have been completed, the operator sends a consent signal to the control unit 80 by operating the device 71 manually.

A similar consent signal is sent to the control unit 80 by the operator at the discharge station ST2, by means of the device 72.

When it has received both of the consent signals, the control unit 80 activates the electric motor 81 so as to cause the belt conveyor 2 to travel one step in the direction F.

The operator at the loading station ST1 then arranges a new row of batteries to be formed on the end of the conveyor belt 2 and makes the above-described electrical and hydraulic connections.

In operation, upon each stoppage of the conveyor 2, the operator at the discharge station ST2 removes the hydraulic connection and distribution devices and the electrical connections of the row or rows of batteries formed and transfers these batteries onto the conveyor 6 which removes them from the plant.

In operation, in the forming zone FZ of the plant, upon each stoppage of the conveyor 2, the control unit 80 brings about, first of all, connection of the pipes 63 of the dispensers 60 to the connectors 21 of the underlying support elements and then, as a result of the opening of the solenoid valves 62, the flow of a stream of electrolyte E from the tanks 16 to all of the rows of batteries which are in the forming zone FZ. With reference to a generic row of batteries included in the forming zone, the stream of electrolyte E reaches the individual batteries of the row through the ducts 42 and the distributor elements 41 interposed between them. In each individual distributor element 41, a portion of the electrolyte stream descends through the ducts 51 until the cells are filled, and then overflows through the pipes 55 into the adjacent stationary tank 3i (Figure 5).

The tanks 3i are connected (in a manner not shown) to an electrolyte-reconditioning system which checks and corrects its temperature and its acid specific gravity in order to readmit it to the system.

The tanks 16 advantageously contain electrolyte with acid specific gravity which increases in the direction of movement of the conveyor 2. The final tank or tanks 16 advantageously contain electrolyte having an acid specific gravity substantially equal to that which is optimal for the subsequent operative use of the batteries.

In operation, upon each stoppage of the conveyor 2, the various rows of batteries are connected to a new dispenser device 60 in order to receive a stream of electrolyte and are also connected to the direct-current voltage supply by means of the brushes 23 and 24.

During the execution of a forward step of the conveyor 2, the batteries in the forming zone FZ are preferably disconnected from the voltage supply.

In the mode of operation described above, the pauses or stoppage periods between two successive steps of the belt conveyor 2 are not necessarily uniform but depend on the times required by the operators at the loading and discharge stations to arrange a new row of batteries to be formed and to remove a new row of formed batteries, respectively.

The control unit 80 may therefore advantageously be arranged to detect the durations of the pauses and to calculate the Ah supplied to the various rows of batteries in the forming zone. If the Ah supplied tend to be too great because of the slowness of the operators, the control unit 80 can advantageously control the rectifier circuits 30 so as to reduce the intensity of the current supplied to the batteries during the final stage of their journey through the forming zone.

If, on the other hand, the Ah supplied to the batteries tend to be below predetermined values because the operators are too "quick", the control unit 80 can advantageously control the forward movement of the belt conveyor 2 independently of the consent signals supplied by the operators, thus delaying, for example, the execution of one or more movement steps, and/or may bring about an increase in the intensity of the current supplied to the batteries.

The plant may comprise, for example, 40 dispenser devices in the forming zone FZ and, in this case, 40 steps and 40 stoppages are required for each row of batteries in order to pass through the entire forming zone.

A plant according to the invention has small dimensions and low implementation costs and enables the electrochemical forming of lead-acid batteries to be performed in relatively short times.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A plant (1) for the electrochemical forming of lead-acid batteries (B), particularly batteries for starting motor vehicles, comprising:
- an endless-belt conveyor (2), movable in steps along a substantially horizontal operative path (F) between a loading station (ST1) in which, upon each stoppage between two steps, it can receive, on one of its end portions, at least one row (R) of batteries (B) to be formed, arranged transverse its direction of movement, and a discharge station (ST2) in which, upon each stoppage, it enables at least one row of formed batteries (B) to be removed from its opposite end portion,
- a plurality of support elements (20) which are fixed to a longitudinal side of the belt conveyor (2) and each of which can be associated with a row (R) of batteries transported, each support (20) carrying a hydraulic connector (21) with an inlet (21a) and an outlet (21b), as well as electrical-connection members (23, 24; 29, 34),
- fixed, direct-current, electrical voltage-distribution means (30; 25-27) which extend along the operative path and which can be engaged by the electrical-connection members (23, 24) of the support elements (20) which extend from the upper side of the belt conveyor (2),
- electrical-interconnection means (29, 31; 33, 34) which can be connected releasably to the terminals or poles (32) of the batteries (B) of each row (R) in order to connect these batteries (B) in series between the electrical-connection members (23, 24) of the associated support element (20),
- a plurality of hydraulic interconnection and distribution devices (40) each of which can connect the outlet (21b) of the hydraulic connector (21) of a support element (20) to the inlet openings (47) of the cells (58) of the batteries (B) of a row (R), and
- electrolyte-supply means (16, 60) comprising a plurality of dispensing devices (60) which are disposed in fixed locations along the operative path and are spaced apart by a distance corresponding to one step of the conveyor (2), and each of which, upon each stoppage of the conveyor, can be connected to the inlet (21a) of the hydraulic connector (21) of a corresponding support element (20) of the belt conveyor (2) in order to dispense a stream of electrolyte to the batteries (B) of the corresponding row (R), by means of the associated hydraulic interconnection and distribution devices (40).

2. A plant according to Claim 1 in which the voltage-distribution means (30; 25-27) are arranged to apply a direct-current electrical voltage to the electrical connection members (23, 24) associated with the support elements (20) extending from the upper side of the conveyor (2), solely during the stoppages between two consecutive steps thereof.

3. A plant according to Claim 1 or Claim 2 in which a respective pair of sliding electrical contacts members or brushes (23, 24) is fixed to each support element (20).

4. A plant according to any one of the preceding claims in which each hydraulic interconnection and distribution device (40) comprises a plurality of distributor elements (41) which can be connected to one another in cascade by means of duct portions (42), each distributor element (41) having a plurality of flow ducts (51) each of which can admit a stream of electrolyte to a corresponding cell (48) of the corresponding battery (B).

5. A plant according to any one of the preceding claims in which the belt conveyor (2) comprises a plurality of parallel, endless belt sections (2a, ..., 2z) which can be moved in steps, in synchronism.

6. A plant according to Claim 5 in which the parallel, endless belt sections (2a, ..., 2z) are spaced apart transversely, stationary electrolyte-collection tanks (3a, ..., 3z) extending between adjacent pairs of conveyor-belt sections.

7. A plant according to Claims 4 and 6 in which each flow duct (51) of each distributor element (41) is associated with a corresponding breather and overflow duct (52, 54, 55) which opens over an adjacent electrolyte-collection tank (3a, ..., 3z).

8. A plant according to Claim 4 or Claim 7 in which each of the distributor elements (41) of each hydraulic interconnection and distribution device (40) comprises an elongate, hollow body (43) in which a distribution chamber (53) having an inlet union (44) and an outlet union (45) is defined, and from which the flow ducts (51) extend.

9. A plant according to Claim 8 in which dividing walls (56, 57) are provided in the chamber (53) defined in each distributor element (41) to define a labyrinthine path between the inlet union (44) and the outlet union (45).

10. A plant according to Claim 9 in which, in the chamber (53) of each distributor element (41), a first dividing wall (56) is provided upstream of the flow ducts (51) and a second dividing wall (57) is provided downstream of the flow ducts (51).

11. A plant according to any one of the preceding claims in which each of the dispenser devices (60) comprises an extensible pipe (63) connectible to an electrolyte reservoir (16) by means of an associated solenoid valve (62), actuator means (64, 65) being associated with the extensible pipe (63) for bringing about its movement between a position of disengagement from the inlet (21a) of the hydraulic connector (21) of a support element (20) of the belt conveyor (2), and a position of coupling therewith.

12. A plant according to Claim 11 in which the actuator means comprises a double-acting fluid cylinder (65).

13. A plant according to any one of the preceding claims, further comprising control and operating means (80) for bringing about the forward movement of the conveyor (2) in steps and the coupling of the dispenser devices (60) with the hydraulic connectors (21) of the support elements (20), in phase with the forward movement of the conveyor (2).

14. A plant according to Claim 13 in which the control and operating means comprise consent-signal generating devices (71, 72) which are associated with the loading station (ST1) and with the discharge station (ST2) and which can be activated in order to supply consent signals for the execution of a forward movement or step of the belt conveyor (2).

15. A plant according to Claim 14 in which the control and operating means (80) are arranged to detect the durations of the pauses of the belt conveyor (2) and to calculate the amount of electricity (Ah) supplied to the various rows (Rᵢ) of batteries (B) and correspondingly to control the intensity of the current supplied to the batteries by the electrical-voltage distribution means (30; 27) and/or the duration of the stoppages of the belt conveyor (2), in accordance with predetermined methods.
